# EUROPÄISCHE PATENTSCHRIFT

(11) **EP 2 548 761 B1**
(45) Veröffentlichungstag und Bekanntmachung des Hinweises auf die Patenterteilung: **01.10.2014**
(21) Anmeldenummer: 12170688.1
(22) Anmeldetag: 04.06.2012
(51) Int. Cl.: B60M 1/28, H02G 1/04

(54) **Seilzugschutztraverse**
Protective traverse for a cable winch
Traverse de protection de câble de commande

(30) Priorität: 18.07.2011 DE 202011103375 U
(43) Veröffentlichungstag der Anmeldung: 23.01.2013
(73) Patentinhaber: GA Hochspannung Leitungsbau GmbH, 29664 Walsrode (DE)
(72) Erfinder: Riebenstahl, Mario, 06110 Halle/S. (DE); Koehler, Wolfgang, 06905 Bad Schmiedeberg (DE)
(74) Vertreter: Gulde & Partner

(56) Entgegenhaltungen:
- DE-U1- 20 007 840
- GB-A- 2 431 779
- US-A1- 2003 156 936
- US-B1- 6 345 808

## Beschreibung

Die Erfindung betrifft eine Seilzugschutztraverse zur Montage oder Demontage von Freileitungsseilen im Mittel- und Hochspannungsbereich unter Umgehung aufwendiger Gerüstaufbauten, insbesondere zur Sicherung gefahrlosen Arbeitens in Kreuzungsbereichen von Verkehrswegen des Bahn- oder Straßenverkehrs.

Die erfindungsgemäße Seilzugschutztraverse entwickelt die Vorrichtung nach DE 200 07 840 U1 weiter, wobei Aspekte zur Erhöhung der Arbeitssicherheit als neue und die bekannte Lösung vervollkommnende erfinderische Merkmale Berücksichtigung finden.

Zur Vermeidung der Stilllegung des fließenden Bahn- oder Straßenverkehrs für die Zeit der Montage oder Demontage von Freileitungen über diese Verkehrswege oder zum Schutz anderer darunter befindlicher Baulichkeiten, Kanälen etc. muss Sorge dafür getragen werden, dass keinerlei Gefährdungspotential von den vorgenannten Arbeiten ausgeht.
Bekannte Hilfseinrichtungen oder Technologien zum Wechsel von Freileitungsseilen sind beispielsweise vor Ort errichtete Schutzgerüste mit dazwischen gespannter Netzeindeckung, die Technologie der sogenannten Rollenleine oder das Verschiebenetz-Verfahren. Die ortsfest errichteten Schutzgerüste der vorgenannten Art sind an den genannten Kreuzungsorten aufwendig auf dem Baugrund zu stabilisieren und seitlich abzuspannen, wobei zwischen den parallel gegenüberstehenden und in der größtmöglichen Höhe Fangnetze zwischen ihnen in der herkömmlichen Technologie zu spannen sind. Diese Fangnetze sichern einen Verkehrsweg oder dergleichen vor herabfallenden oder absinkenden Bereichen eines Freileitungsseiles. Zur Installation der o.g. Fangnetze muss bisher der darunter zu sichernde Abschnitt zumindest kurzzeitig gesperrt werden, d.h. auch Fahrleitungen kreuzenden Eisenbahnverkehrs müssen abgeschaltet werden.
Eine derartige Verfahrensweise erfordert eine lange Vorbereitungszeit, eine umfangreiche Abstimmung aller Beteiligten, eine geprüfte Bauabnahme der Gerüstbauwerke und sie verursacht hohe Kosten. Letztere übersteigen oftmals die Kosten, die eigentlich für die Arbeiten zum Wechsel oder zur Montage der Freileitungsseile kalkuliert sind.
Es ist zudem auch unmöglich, einen kurzfristigen Einsatz von Gerüstbauwerken in einem Havariefall, etwa beim Bruch einer Freileitung durch Eisbehang im Winter, zu planen und zu realisieren.

Weiterhin ist für die Demontage oder Montage von Freileitungsseilen das Verfahren der wie oben genannten Rollenleine bekannt. Hier wird auf einem Leiterseil ein Perlonseil überführt, an welchem in definierten Abständen Rollengehänge befestigt sind. Nach Erreichen eines dem Ausgangspunkt gegenüberliegenden Freileitungsmastes wird das Perlonseil dort fixiert und die Rollengehänge werden nach oben geklappt, sodass das Freileitungsseil in Transportlage zum Ausziehen aus dem Leitungsbereich vorliegt.
Bevor das Ausziehen beginnt, wird das neue Freileitungsseil mittels eines Ziehstrumpfes am alten Seil befestigt, sodass in einem Arbeitsgang ein Ausziehen des alten und ein Einziehen des neuen Freileitungsseils erfolgen kann. Danach wird die Seilspannung der die Vorspannung der Freileitungsseile sichernden Perlonseile am Anfang und am Ende beider Freileitungsabschnitte gelöst und es werden die Perlonseile und die alte Freileitung entfernt. Im Vergleich zur Errichtung der ebenso Schutz bietenden Gerüstbauwerke sind Rollenleinen zwar günstiger, aber nicht immer realisierbar, insbesondere bei Demontagen, da für die Demontage der zurückbleibenden Rollenleine auch wieder eine Schaltung der Fahrleitung oder einer tiefer liegenden anderen Freileitung nötig ist.

In ähnlicher Weise, wie die eingangs erwähnten mit Fangnetzen kombinierten Gerüstbauwerke, die allerdings stationär bleiben, wird nach dem Verschiebenetz-Verfahren gearbeitet. Demzufolge werden neben der Kreuzungsstelle pro Seite zwei Maste errichtet, die untereinander mit Tragseilen im Rechteck verbunden sind. Die Tragseile können nur in einer Verkehrspause oder bei Unterbrechung eines gegebenenfalls vorhandenen Zugbetriebes an elektrifizierten Eisenbahnstrecken verspannt werden. Die Maste müssen am Erdboden sicher abgespannt werden. Schließlich wird ein Netz über die Kreuzungsstelle geführt, das in Wirkverbindung mit den Tragseilen gebracht ist. Der Aufwand zur Gestellung einer derartigen Montage-/Demontagekonstruktion ist nur unwesentlich geringer, als es die Verwendung vor Ort errichteter Gerüstbauwerke erbringt.

Schließlich sei auf eine Lösung, gemäß DE 200 07 840 U1 hingewiesen, die als nächstliegender Stand der Technik benannt wird. Hierbei handelt es sich um eine Lösung in einer ähnlichen Ausführung einer montagefähigen Schweißkonstruktion, die zum Abfangen von zu montierenden oder zu ersetzenden Freileitungsseilen dient. Diese kann mit weniger aufwendigen Vorbereitungshandlungen in Genehmigung, Prüfung der Statik zur Ausführung genutzt werden. Besonderer Sorgfalt bedarf es jedoch beim Einfangen eines zu ersetzenden Freileitungsseiles, während des Einfahrens der Vorrichtung zwischen z.B. vorhandene Freileitungsseile. In der Hauptsache muss darauf geachtet werden, dass sich ein Freileitungsseil beim Ein- oder Ausziehen nicht zwischen den Rollen innerhalb der Vorrichtung verklemmt, durch plötzliche unvorhergesehene Seilschläge wieder aus ihr heraus schwingt oder, bei einem Seilriss, ein loses Ende auf z.B. stromführende Fahrleitungsdrähte einer elektrifizierten Bahnstrecke herabfällt.
Die genannte Vorrichtung ist nur geringfügig durch eine in Baukastenform vornehmbare Erweiterung in ihrer Spannweite variierbar und sie wird schwankungssicher durch ein seitliches Abspannen in der vorbestimmten Lage und in der vorgesehenen Höhe gehalten, wobei ihre Verwendung unkompliziert ist und relativ geringe Kosten verursacht. An eine Fixierung von Anbauteilen innerhalb eines bestimmten Winkels oder an weitere seitliche Anbauten an die vorgenannten Anbauteile ist nicht gedacht.

Eine Möglichkeit, Werkzeuge an einem Arbeitsgerät in einem bestimmten Winkel zu halten, wird in DE 20 2009 002 114 U1 vorgeschlagen. Es handelt sich hierbei um eine Haltevorrichtung für (ein) Endgerät an einem Flurförderzeug.
Die Haltevorrichtung besteht hier aus mehreren miteinander verbundenen Drehgelenken, wobei die Drehachsen von wenigstens zwei Drehgelenken nicht parallel zueinander ausgerichtet sind und jedes Drehgelenk in einer gewünschten Drehstellung arretierbar ist. Die als Schenkelsegmente ausgebildeten Verbindungen zwischen den Drehpunkten sind hier als flache Platten ausgeführt, sodass ein Abknicken derselben über ihren Querschnitt nicht ausgeschlossen werden kann. Für eine Verwendung in einer aus mehreren Teilen bestehenden Schweißkonstruktion zum Halten von Anbauteilen erscheint eine derartige Haltevorrichtung nicht geeignet.

Der beschriebene Stand der Technik zeigt, dass es verschiedene Möglichkeiten der Demontage oder Montage von Freileitungsseilen über Kreuzungspunkte von Verkehrswegen gibt, die sowohl mehr als auch weniger technischen und nicht zuletzt hohen finanziellen Aufwand erfordern.
Eindeutig den Vorzug sollten indes montagefähige und schnell umsetzbare Lösungen erhalten, die es weiterzuentwickeln gilt.

Es ist daher Aufgabe der Erfindung die Weiterentwicklung einer Montagevorrichtung vorzuschlagen, die eine deutliche Steigerung der Handhabbarkeit erbringt, was einerseits einen vereinfachten Transport der Vorrichtung selbst zur Folge hat und andererseits das Einfangen und Sichern eines zu wechselnden Freileitungsseiles besser als bisher gestaltet und ihr Ein- und Ausfahren zwischen gespannten Freileitungsseilen einer Leitungstrasse in noch kürzerer Zeit als bisher gestattet, wodurch sehr hohe Montage- und Demontagekosten von sonst üblichen Schutzgerüsten eingespart werden sollen.

Die Aufgabe der Erfindung wird nachfolgend durch die Merkmale des Patentanspruches 1 gelöst.
Weiter die Erfindung ausgestaltende Merkmale sind in den Unteransprüchen 2 bis 6 dargelegt.

Die erfindungsgemäße Seilzugschutztraverse gewährleistet eine schnelle und zuverlässige Montage oder Demontage von Leiterseilen in Kreuzungsbereichen ohne die Freischaltung von anderen stromführenden Leitungen, die darunter liegen und ohne zusätzliche Verkehrspausen. Es sind des Weiteren keine aufwendigen individuellen Konstruktionen in Form von Schutzgerüsten notwendig. Durch die Möglichkeit, die Seilzugschutztraverse nach dem Baukastenprinzip in ihrer Spannweite bis zu einer technisch bedingten Grenze den Gegebenheiten im Kreuzungsbereich anzupassen, ist ein universeller Einsatz möglich. Zeitaufwendige Genehmigungsverfahren sind in der Regel nicht erforderlich.
Die weiterentwickelte Seilzugschutztraverse ist eine trogförmige Stahlkonstruktion, die an ihren Innenflächen Laufrollen zum Durchziehen der zu demontierenden und/oder auszuwechselnden Seile aufweist und, die mit einer Aufhängung - z.B. einer Zweipunktaufhängung - zur Halterung an einem Hebezeug, etwa an einem Autokran, ausgestattet ist, wobei an den Enden der Seilzugschutztraverse Abspannseile zur Verhinderung von seitlichem Ausschwenken vorgesehen sind und es ist die trogförmige Stahlkonstruktion mehrfach zum Zweck des einfacheren Transportes teilbar ausgebildet.
Die Erfindung geht davon aus, dass die Seilzugschutztraverse aus einem mit einem mittigen Montagestoß versehenen Mittelstück, zwei in horizontaler Lage fixierbaren oder in definiertem Winkel fixiert absenkbaren Seitenteilen sowie aus zwei jeweils links und rechts an den freien Enden der Seitenteile fest horizontal ansetzbaren Verlängerungsstücken besteht, wobei an der nach oben offenen Seite der Seilzugschutztraverse, nahe der oberen Lagerung der vertikalen Laufrollen, Schleifbleche angebracht sind und mindestens im Mittelstück der Seilzugschutztraverse eine durch Funk ferngesteuerte Seilrückhalteeinrichtung mit einem schwenkbaren Schließmittel angebaut ist und sich zumindest an einem seitlichen Ende des Mittelstücks oder am seitlichen Ende eines der Seitenteile eine Seilfangeinrichtung befindet.

Diese Ausbildung hat den Vorteil, dass der Transport der Seilzugschutztraverse in weiter verkürzten einzelnen und bedarfsweise die Spannweite der Seilzugschutztraverse an einer Baustelle erweiternden Segmenten weniger Aufwand als bisher erfordert, wenn es darum geht, für die Größe eines Transportmittels eine gegebenenfalls sonst notwendige Überlänge zu vermeiden.
Außerdem wird die Sicherheit einer derartigen Seilzugschutztraverse für ihren bestimmungsgemäßen Einsatz wesentlich durch neue sicherheitstechnische Maßnahmen entscheidend verbessert, indem Schleifbleche ein einzufangendes Freileitungsseil, am oberen offenen trogförmigen Bereich der Seilzugschutztraverse angebracht, ein Verklemmen in eine sonst offene Lagerung von vertikal angeordneten Laufrollen verhindern, eine Seilrückhalteeinrichtung vor einem Seilzug, nach eingefangenem Freileitungsseil, elektronisch gesteuert geschlossen sowie eine Seilfangeinrichtung automatisch in Tätigkeit versetzt werden kann, wenn der Riss eines Freileitungsseiles oder eines Zugseiles eingetreten ist, um die an einer Seilwinde arbeitenden Monteure nicht einem Stromschlag auszusetzen, falls ein Freileitungsseil auf z.B. stromführende Fahrleitungen einer elektrifizierten Bahnstrecke herabfällt.

In einer Ausgestaltung der Erfindung ist vorgesehen, dass die Seitenteile für die Seilzugschutztraverse in eine aufgeschwenkte horizontale Lage in Flucht mit dem Mittelstück ausrichtbar sind, indem jeweils ein Bolzen mit einem Bund zwischen Laschen an den beiden Untergurten des Mittelstückes und denen der Untergurte der Seitenteile eingesetzt und mit Verbindungselementen befestigt ist.

Dadurch gelingt es, die in definiertem Winkel begrenzt schwenkbaren Seitenteile der Seilzugschutztraverse horizontal sicher zu versteifen und somit die Spannweite der Seilzugschutztraverse auf das technisch mögliche Maß zu erweitern. Der Bund eines jeden Bolzens erfüllt dabei die Funktion einer Druckfläche zwischen der Arretierung des Mittelstückes und je eines Seitenteils in einer definiert Winkel einstellbaren Position.

Die Ausbildung des Bolzens mit dem Bund ist dabei derartig ausgeführt, indem der Bolzen mit dem Bund beidseitig eine gabelförmige Ausbildung mit Querbohrungen besitzt, wobei der Bund mittig zwischen den Enden des Bolzens angebracht ist.

Damit ist es möglich, an den Untergurten von Mittelstück und Seitenteilen eine äußerst verwindungsteife Befestigung zwischen den o.g. Einzelbauteilen der Seilzugschutztraverse herzustellen.

In dem Bestreben, die Erfindung auf sicherheitstechnischem Gebiet weiterzubilden soll auf die folgenden Maßnahmen hingewiesen werden.

Zunächst bestehen die nahe der oberen Lagerung der vertikalen Laufrollen angebrachten Schleifbleche aus einem um 90° abgewinkelten Blechstreifen.

Dieser Blechstreifen deckt den Zwischenraum zwischen der Oberkante der trogförmigen Ausbildung der Seilzugschutztraverse und der jeweils oberen Lagerung der vertikalen Laufrollen ab, die sich im Innern an den Längsseiten der Seilzugschutztraverse befinden, sodass ein Verklemmen eines einzufangenden Freileitungsseiles an dieser Stelle der Lagerung ausgeschlossen ist.

Weiterhin ist eine Seilrückhalteeinrichtung vorhanden, die im Wesentlichen aus einem funktechnisch ansteuerbaren und im Niederspannungsbereich arbeitenden Getriebemotor und aus einem zumindest um 90° schwenkbaren Schließmittel besteht, das einen Sicherungsbügel mit einem Anschlag darstellt.
Der Aufbau einer derart, insbesondere möglichst mittig auf dem Mittelstück der Seilzugschutztraverse vorgesehenen Einrichtung, verhindert vorteilhafterweise ein Herausschlagen eines eingefangenen Freileitungsseiles aus der trogförmigen Ausbildung der Seilzugschutztraverse bei Beginn oder während des Seilzuges eines Freileitungsseiles, denn die Montage- oder Demontagearbeiten beginnen stets erst nach Schließung der Seilrückhalteeinrichtung.

Schließlich kann nicht ausgeschlossen werden, dass ein Freileitungs- oder ein Zugseil während des Seilzuges reißt und Monteure am Montageort, insbesondere im Bereich einer Winde, verletzt.
Die ein Solches verhindernde Seilfangeinrichtung stellt dabei im Wesentlichen eine drehzahlabhängig aktivierbare Seilfangbremse mit auf ein Freileitungs- oder auf ein Zugseil anpressbaren Rückhaltemitteln dar, die mit einer Transportrolle mit integrierter Drehzahlmessung in funktionaler Wirkverbindung steht.
Eine in kurzer Zeit unverhältnismäßig hoch ansteigende Drehzahl an einer horizontalen oder an einer vertikalen Laufrolle, sorgt dabei für eine Signalgebung die dazu geeignet ist, Rückhaltemittel zu aktivieren, die ein außer Kontrolle geratenes Freileitungsseil oder ein Zugseil festklemmen.
Die Seilfangeinrichtung ist dabei mindestens einmal am äußeren Ende des Mittelstückes oder je einmal an den Enden von anschraubbaren Seitenteilen oder an den Enden von zusätzlich anschraubbaren Verlängerungsstücken vorhanden.

Die Erfindung soll nachfolgend anhand der Ausführungsform für eine erfindungsgemäße Seilzugschutztraverse näher erläutert werden.
Die zugehörigen Zeichnungen zeigen:
- Figur 1:: eine Teilvorderansicht der Seilzugschutztraverse mit Mittelstück und einem rechten Seitenteil,
- Figur 2:: Einzelheit "X" mit Darstellung der horizontalen Fixierbarkeit von Mittelstück und rechtem Seitenteil,
- Figur 3:: Schnitt A-A gemäß Figur 4,
- Figur 4:: Einzelheit "Y" gemäß Figur 1,
- Figur 5:: einen inneren Seilzugschutztraversenbereich für Mittelstück, Seitenteil und Verlängerungsstück,

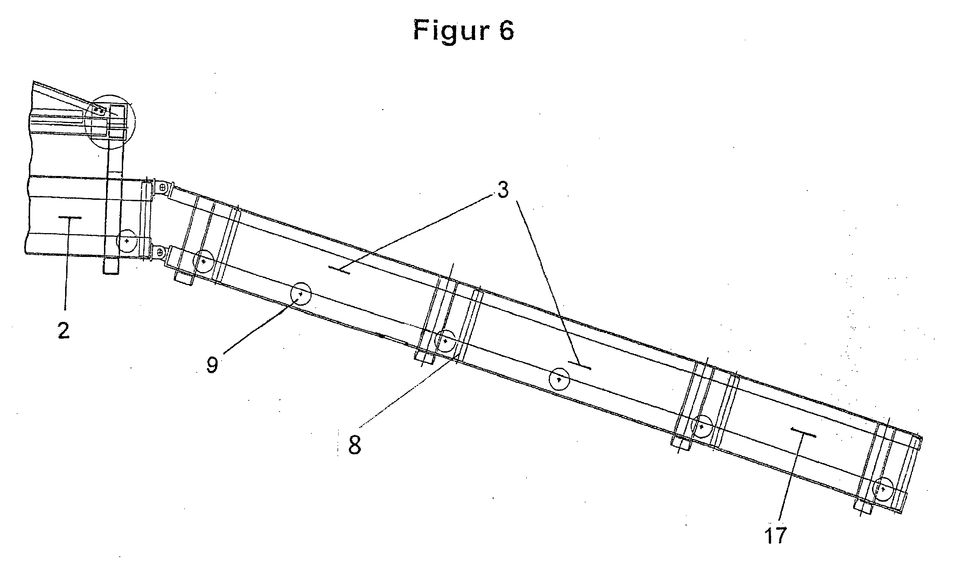

- Figur 6:: eine Darstellung gemäß Figur 1 mit durch ein Verlängerungsstück erweiterten Seitenteilen,
- Figur 7: eine Schnittdarstellung nach Figur 3 mit mittiger Platzierung einer Seilrückhalteeinrichtung im Mittelstück, und
- Figur 8: eine Teilvorderansicht der Seilzugschutztraverse nach Figur 6 mit zwei Seilfangeinrichtungen.

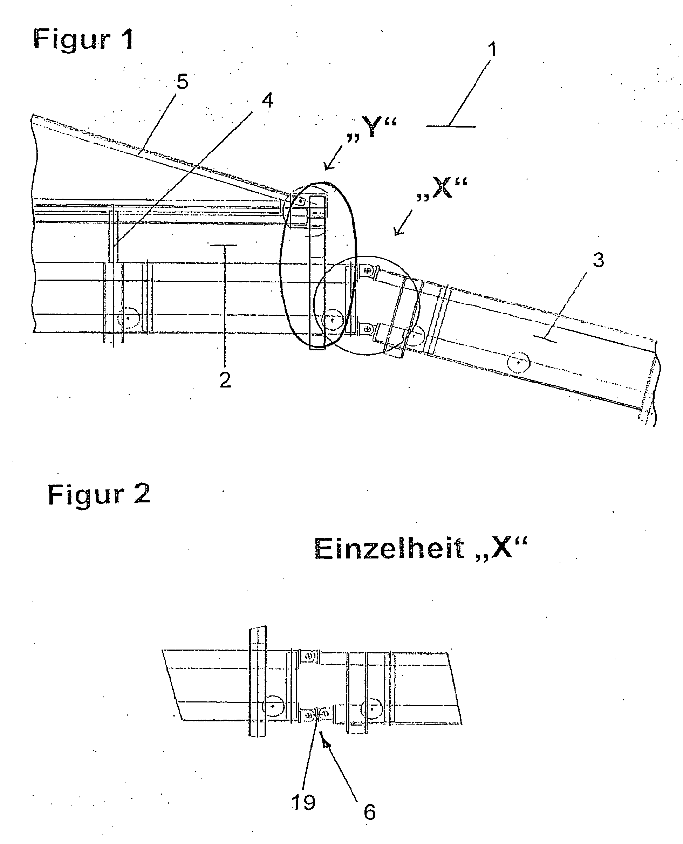

Nach Figur 1 ist in einer ersten Übersicht dargestellt, wie die Anordnung eines Mittelstückes 2 und eines sich daran anschließenden Seitenteils 3 vorgenommen werden kann.

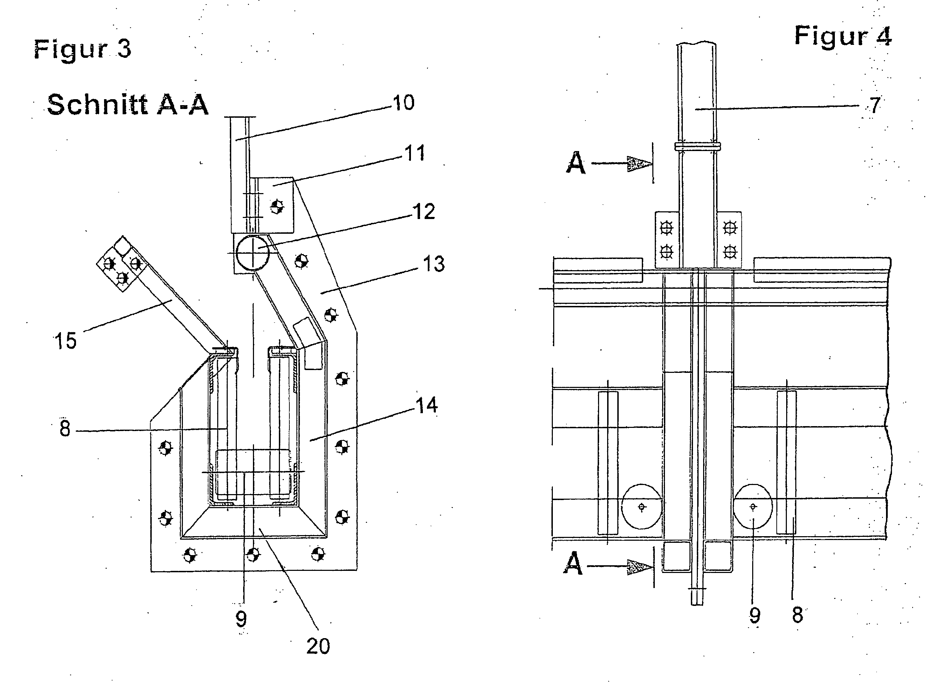

Entsprechend der Figuren 3 und 4 ist zu sehen, dass die Seilzugschutztraverse 1 als eine trogförmige Stahlkonstruktion, die aus einem Mittelstück 2 und zwei Seitenteilen 3 gebildet wird, vorliegt, wobei letztere definiert schwenkbar, jeweils an dessen linker und rechter Seite, angebracht sind. Alternativ und hinzukommend ist vorgesehen, dass an den freien äußeren Enden der Seitenteile 3 jeweils ein Verlängerungsstück 17, in gleicher Ausrichtung zu den Seitenteilen 3 fluchtend, fest angebracht ist.

Nach Figur 2 ist in einer vergrößerten Darstellung als Einzelheit X gemäß der Angabe in Figur 1 gezeigt, wie mittels eines Bolzens 6 mit Bund 19, der über Laschen und Verbindungsmitteln an den Untergurten am Ende des Mittelstückes 2 und in gleicher Höhe am Anfang eines anzusetzenden Seitenteils 3 befestigt ist, eine feste Verbindung zwischen den Bauteilen erzielt wird und so beispielsweise ein aufgeschwenktes Seitenteil 3 in eine stabile horizontale Lage gebracht werden kann. Der Bolzen 6 mit Bund 19 ist dazu zweckmäßigerweise an seinen beiden Enden gabelförmig ausgebildet und mit Querbohrungen 18 zur Aufnahme von Verbindungsmitteln in Form von Gewindebolzen ausgestattet, wodurch die oben genannten Laschen erfasst werden und ein fester horizontaler Halt erreicht wird.
Der Ansatz der Verlängerungsstücke 17 an die Seitenteile 3 erfolgt grundsätzlich in horizontaler Ausrichtung, wobei die Befestigung der Verlängerungsstücke 17 über die an den Ober- und Untergurten angebrachten Laschen und über herkömmliche Schraubverbindungen durchführbar ist.

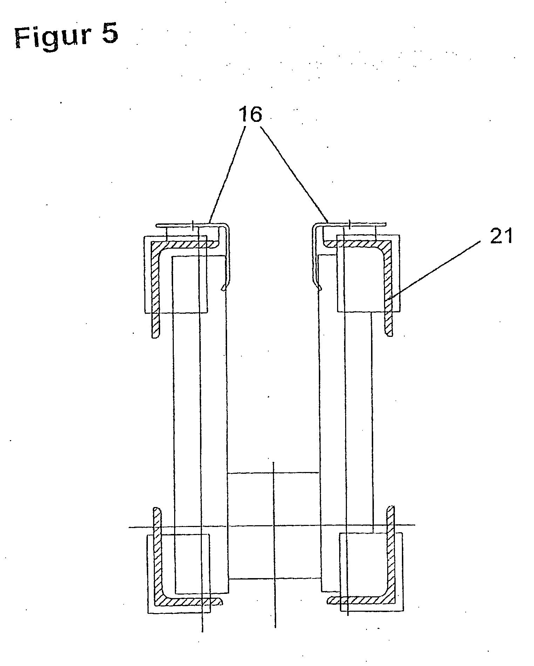

In Figur 3 und in weiterer herausgelöster Darstellung in Figur 5 ist gezeigt, wie durch die Anordnung von Schleifblechen 16, die vor dem Zwischenraum zwischen den Winkelprofilen 21 und dem oberen Ende einer jeweiligen vertikalen Laufrolle 8 angebracht sind, ein unabsichtliches Verklemmen von einzufangenden Freileitungsseilen verhinderbar ist.

Das Mittelstück 2 der Seilzugschutztraverse 1 besitzt einen mittigen Montagestoß, sodass ihr Transport von einer Baustelle zur anderen ohne Überlänge auf einem LKW oder auf einem anderen Transportmittel erfolgen kann.
Das Mittelstück 2 kann im montierten Zustand eine Spannweite von ca. 12 m, die Seitenteile 3 eine Länge von beispielsweise 3 m und die Verlängerungsstücke 17 von beispielsweise 1 m erreichen.

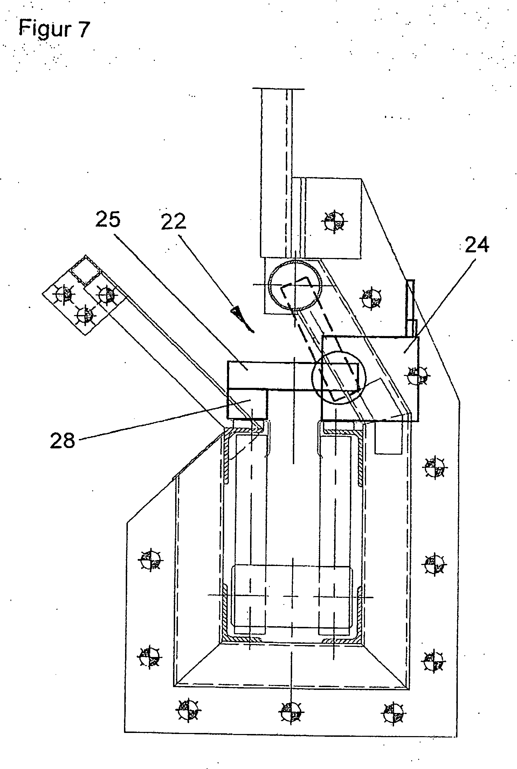

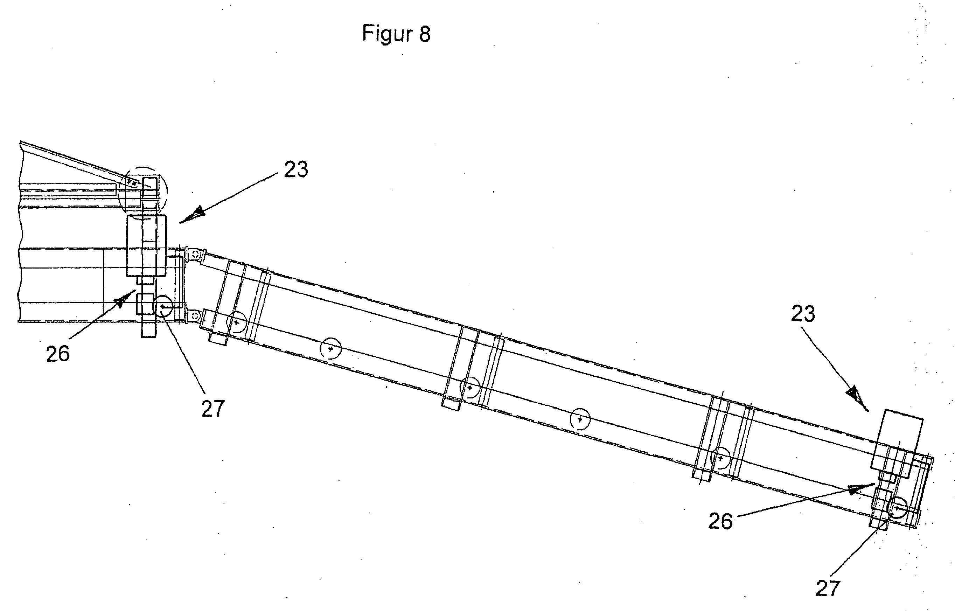

Die Figuren 7 und 8 zeigen weitere Verbesserungen des Arbeits- und Unfallschutzes. So befindet sich möglichst nahe des Montagestoßes im Mittelstück 2 der Seilzugschutztraverse 1 eine Seilrückhalteeinrichtung 22, die vor einem jeden Seilzug funktechnisch aktivierbar ist. Das bedeutet, dass, nachdem ein Freileitungsseil in der Seilzugschutztraverse 1 eingefangen ist, der Sicherungsbügel 25 um 90° auf den Anschlag 28 geschwenkt ist und dadurch ein gegebenenfalls zurückschlagendes Freileitungsseil nicht aus der Seilzugschutztraverse 1 herausgleiten kann.

In Figur 8 ist weiterhin prinzipiell gezeigt, an welchen Stellen vorteilhafterweise ein oder mehrere Seilfangeinrichtungen 23 platziert werden können, um im Falle des Reißens eines Freileitungsseiles oder eines Zugseiles ein unkontrolliertes Herabfallen derselben zu vermeiden. Innerhalb der Seilfangeinrichtung 23 befindet sich eine Seilfangbremse 26, die anspricht, wenn sich die gemessene Drehzahl einer ihr zugeordneten Transportrolle 27 ruckartig erhöht.

Die Vorteile der weiterentwickelten Seilzugschutztraverse 1 können vor allem darin gesehen werden:
- Vereinfachung des Umsetzens der Seilzugschutztraverse 1 durch mehrfache und unkomplizierte Montage-/Demontagemöglichkeit,
- die Seitenteile 3 für die Seilzugschutztraverse 1 sind in zwei Arbeitspositionen auf- und definiert abschwenkbar und in ihren Endlagen jeweils fixierbar,
- die Seilzugschutztraverse 1 ist mittels an die Seitenteile 3 ansetzbaren Verlängerungsstücken 17 in ihrer Auslage um ein weiteres kurzes Stück verlängerbar,
- Schonung der Vorseile und der Freileitungsseile bei der Montage (Vermeidung von Scheuerstellen),
- Verbesserung des Arbeits- bzw. Unfallschutzes durch Vorsehen von Schleifblechen 16 an der Oberkante der trogförmigen Konstruktion der Seilzugschutztraverse 1, einer Seilrückhalte- und einer Seilfangeinrichtung 22, 23.

### Bezugszeichenliste

- 1 -: Seilzugschutztraverse
- 2 -: Mittelstück
- 3 -: Seitenteil
- 4 -: Profil
- 5 -: Winkelprofil
- 6 -: Bolzen
- 7 -: U-Profil
- 8 -: Laufrolle, vertikal
- 9 -: Laufrolle, horizontal
- 10 -: Winkelprofil
- 11 -: Anschlußwinkel
- 12 -: Rohr
- 13 -: Stoßblech
- 14 -: Profil
- 15 -: Winkelprofil
- 16 -: Schleifblech
- 17 -: Verlängerungsstück
- 18 -: Querbohrung (nicht näher dargestellt)
- 19 -: Bund
- 20 -: Profil
- 21 -: Winkelprofil
- 22 -: Seilrückhalteeinrichtung
- 23 -: Seilfangeinrichtung
- 24 -: Getriebemotor
- 25 -: Sicherungsbügel
- 26 -: Seilfangbremse
- 27 -: Transportrolle
- 28 -: Anschlag

## Patentansprüche

1. Seilzugschutztraverse (1) zur Montage oder Demontage von Freileitungsseilen im Mittel- bis Hochspannungsbereich, wobei die Seilzugschutztraverse (1) in Form einer trogförmigen geschweißten Stahlkonstruktion, insbesondere aus Profilen (14, 20) bestehend, ausgebildet ist, in welcher vertikale und horizontale Laufrollen (8, 9) integriert sind, **gekennzeichnet dadurch, dass** die Seilzugschutztraverse (1) aus einem mit einem mittigen Montagestoß versehenen Mittelstück (2), zwei in horizontaler Lage fixierbaren oder in definiertem Winkel fixiert absenkbaren Seitenteilen (3) sowie aus zwei jeweils links und rechts an den freien Enden der Seitenteile (3) fest horizontal ansetzbaren Verlängerungsstücken (17) besteht, wobei an der nach oben offenen Seite der Seilzugschutztraverse (1), nahe der oberen Lagerung der vertikalen Laufrollen (8), Schleifbleche (16) angebracht sind und mindestens im Mittelstück (2) der Seilzugschutztraverse (1) eine durch Funk ferngesteuerte Seilrückhalteeinrichtung (22) mit einem schwenkbaren Schließmittel angebaut ist und sich zumindest an einem seitlichen Ende des Mittelstücks (2) oder am seitlichen Ende eines der Seitenteile (3) eine Seilfangeinrichtung (23) befindet.

2. Seilzugschutztraverse (1) nach Anspruch 1, **gekennzeichnet dadurch, dass** die Seitenteile (3) in eine aufgeschwenkte horizontale Lage in Flucht mit dem Mittelstück (2) ausrichtbar sind, indem jeweils ein Bolzen (6) mit einem Bund (19) zwischen Laschen an den beiden Untergurten des Mittelstücks (2) und denen der Untergurte der Seitenteile (3) eingesetzt und mit Verbindungselementen befestigt ist.

3. Seilzugschutztraverse(1) nach Anspruch 2, **gekennzeichnet dadurch, dass** der Bolzen (6) mit dem Bund (19) beidseitig eine gabelförmige Ausbildung mit Querbohrungen (18) besitzt, wobei der Bund (19) mittig zwischen den Enden des Bolzens (6) angebracht ist.

4. Seilzugschutztraverse (1) nach Anspruch 1, **gekennzeichnet dadurch, dass** die nahe der oberen Lagerung der vertikalen Laufrollen (8) angebrachten Schleifbleche (16) aus einem um 90° abgewinkelten Blechstreifen bestehen.

5. Seilzugschutztraverse (1) nach einem der vorhergehenden Ansprüche, **gekennzeichnet dadurch, dass** die Seilrückhalteeinrichtung (22) im Wesentlichen aus einem funktional ansteuerbaren und im Niederspannungsbereich arbeitenden Getriebemotor (24) und aus einem zumindest um 90° schwenkbaren Schließmittel, das einen Sicherungsbügel (25) mit einem Anschlag (28) darstellt, besteht.

6. Seilzugschutztraverse (1) nach einem der vorhergehenden Ansprüche, **gekennzeichnet dadurch, dass** die Seilfangeinrichtung (23) im Wesentlichen eine drehzahlabhängig wirkende Seilfangbremse (26) mit auf ein Freileitungsseil- oder ein Zugseil anpressbaren Rückhaltemitteln darstellt, die mit einer Transportrolle (27) mit einer integrierten Drehzahlmessung in funktionaler Wirkverbindung steht.

## Claims

1. A protective traverse for a cable winch (1) for mounting or dismounting overhead cables in the medium-voltage to high-voltage range, wherein the protective traverse for a cable winch (1) is designed in the form of a trough-shaped welded steel construction, in particular consisting of profiles (14, 20), into which vertical and horizontal rollers (8, 9) are integrated, **characterised in that** the protective traverse for a cable winch (1) consists of a middle piece (2) provided with a central site joint, two lateral parts (3) which can be fixed in a horizontal position or can be lowered at a defined angle, and two extension pieces (17) which can be joined horizontally in a fixed manner to the left and right sides, respectively, of the free ends of the lateral pieces (3), wherein close to the upper support of the vertical rollers (8) drag plates (16) are attached to the side of the protective traverse for a cable winch (1) which is open in an upward direction, and at least in the middle piece (2) of the protective traverse for a cable winch (1) a cable retention mechanism (22) is installed which is radio-controlled and which has a closing means which can be pivoted, and a cable catching mechanism (23) is located at least at a lateral end of the middle piece (2) or at the lateral end of one of the lateral parts (3).

2. The protective traverse for a cable winch (1) according to claim 1, **characterised in that** the lateral parts (3) can be adjusted to a pivoted-open horizontal position so as to be in alignment with the middle piece (2), with one bolt (6) with a collar (19) each being inserted between brackets on the two bottom chords of the middle piece (2) and those of the bottom chords of the lateral parts (3) and being fixed with connection elements.

3. The protective traverse for a cable winch (1) according to claim 2, **characterised in that** the bolt (6) with the collar (19) has on both sides a fork-shaped formation with cross holes (18), wherein the collar (19) is attached in the middle between the ends of the bolt (6).

4. The protective traverse for a cable winch (1) according to claim 1, **characterised in that** drag plates (16) attached close to the upper support of the vertical rollers (8) consist of a sheet metal strip angled at 90°.

5. The protective traverse for a cable winch (1) according to any one of the preceding claims, **characterised in that** the cable retention mechanism (22) substantially consists of a geared motor (24) which can be driven functionally and which operates in the low-voltage range, and a closing means which can be pivoted by at least 90°, which is a safety catch (25) with a stop (28).

6. The protective traverse for a cable winch (1) according to any one of the preceding claims, **characterised in that** the cable catching mechanism (23) is substantially a cable catching brake (26) operating as a function of the rotational speed, with retention means which can be pressed onto an overhead cable or a traction cable, which functionally cooperates with a transport roller (27) with integrated metering of the rotational speed.

## Revendications

1. Traverse de protection de câble de commande (1) pour le montage ou le démontage de câbles de lignes aériennes dans la plage de moyenne à haute tension, la traverse de protection de câble de commande (1) étant constituée sous la forme d'une construction en acier soudée en forme d'auge, en particulier composée de profilés (14, 20), dans laquelle sont intégrés des galets de roulement (8, 9) verticaux et horizontaux, **caractérisée en ce que** la traverse de protection de câble de commande (1) se compose d'une pièce centrale (2) munie d'un joint de montage central, de deux parties latérales (3) pouvant être fixées en position horizontale ou pouvant être abaissées fixées dans un angle défini, ainsi que deux pièces de prolongement (17) pouvant être ajoutées horizontalement et fixement respectivement à gauche et à droite aux extrémités libres des parties latérales (3), des tôles de frottement (16) étant mises en place sur le côté, ouvert vers l'extérieur, de la traverse de protection de câble de commande (1), à proximité du support supérieur des galets de roulement (8) verticaux, et un dispositif de retenue de câble (22) télécommandé par radio, avec un moyen de fermeture pivotant, étant monté au moins dans la pièce centrale (2) de la traverse de protection de câble de commande (1) et un dispositif d'accrochage de câble (23) étant situé au moins à une extrémité latérale de la pièce centrale (2) ou à l'extrémité latérale d'une des parties latérales (3).

2. Traverse de protection de câble de commande (1) selon la revendication 1, **caractérisée en ce que** les parties latérales (3) peuvent être orientées dans une position horizontale pivotée vers le haut en affleurement avec la pièce centrale (2) par le fait que respectivement un boulon (6) avec un collet (19) est introduit entre des pattes sur les deux membrures inférieures de la pièce centrale (2) et celles des membrures inférieures des parties latérales (3), et est fixé avec des éléments de raccordement.

3. Traverse de protection de câble de commande (1) selon la revendication 2, **caractérisée en ce que** le boulon (6) avec un collet (19) possède des deux côtés une formation en forme de fourche avec des alésages transversaux (18), le collet (19) étant mis en place de façon centrée entre les extrémités du boulon (6).

4. Traverse de protection de câble de commande (1) selon la revendication 1, **caractérisée en ce que** les tôles de frottement (16) mises en place à proximité du support supérieur des galets de roulement (8) verticaux se composent d'une bande de tôle coudée à 90°.

5. Traverse de protection de câble de commande (1) selon une des revendications précédentes, **caractérisée en ce que** le dispositif de retenue de câble (22) se compose essentiellement d'un motoréducteur (24), pouvant être piloté fonctionnellement et fonctionnant dans la plage de basse tension, et d'un moyen de fermeture pouvant pivoter d'au moins 90° qui représente un étrier de sécurité (25) avec une butée (28).

6. Traverse de protection de câble de commande (1) selon une des revendications précédentes, **caractérisée en ce que** le dispositif d'accrochage de câble (23) représente essentiellement un frein d'accrochage de câble (26), agissant en fonction de la vitesse de rotation, avec des moyens de retenue, pouvant être pressés sur un câble de ligne aérienne ou un câble de commande de ligne aérienne, qui sont en liaison active opératoire avec un rouleau de transport (27) ayant une mesure intégrée de vitesse de rotation.
